# EUROPÄISCHE PATENTSCHRIFT

(11) **EP 2 566 110 B1**
(45) Veröffentlichungstag und Bekanntmachung des Hinweises auf die Patenterteilung: **01.10.2014**
(21) Anmeldenummer: 11179360.0
(22) Anmeldetag: 30.08.2011
(51) Int. Cl.: H04L 12/417, H04L 29/08

(54) **Verfahren zum Übertragen von Telegrammen in einem Automatisierungssystem**
Method for transmitting telegrams in an automation system
Procédé de transmission de télégrammes dans un système d'automatisation

(43) Veröffentlichungstag der Anmeldung: 06.03.2013
(73) Patentinhaber: Siemens Aktiengesellschaft, 80333 München (DE)
(72) Erfinder: Weber, Karl, 90518 Altdorf (DE)

(56) Entgegenhaltungen:
- WO-A1-2009/098616
- US-A1- 2010 008 372
- US-A1- 2010 070 666

## Beschreibung

Die vorliegende Erfindung betrifft ein Verfahren zum Übertragen von Telegrammen in einem Automatisierungssystem. Überdies betrifft die vorliegende Erfindung ein Automatisierungssystem.

In Automatisierungssystem werden bevorzugt Echtzeitsysteme als Kommunikationsverbindung eingesetzt, da diese eine exzellente Leistung bezüglich der Kommunikation und eine hohe Verfügbarkeit garantieren. Dabei sind in einigen Fällen die Daten nicht nur für die einzelnen Netzwerkkomponenten des Automatisierungssystems, sondern für eine Reihe von Applikationen relevant. Hierbei wäre eine Kommunikation zwischen den einzelnen Netzwerkkomponenten eines Automatisierungssystems ideal, die die erforderlichen Daten mit einer möglichst geringen Verzögerung an ihr Ziel bringt. Hierbei ist eine natürliche Grenze durch die Datenrate der Kommunikationsverbindung gegeben. Die Verzögerung der Datenübertragung sollte allerdings nicht durch weitere Einflussgrößen entscheidend begrenzt werden. Dies sollte auch dann gelten, wenn einzelne Netzwerkkomponenten ausfallen, die auf dem Weg zwischen Quelle und Ziel liegen.

In Automatisierungssystemen werden Daten beispielsweise in Form von Telegrammen zwischen den einzelnen Netzwerkkomponenten übermittelt. Als Datenleitungen werden üblicherweise Feldbusse eingesetzt, die in dem Standard IEC 61158 definiert sind. Hierzu werden beispielsweise Ethernet-Verbindungen genutzt, die entsprechende Switches aufweisen, bei denen die Daten mit Hilfe der Adressformationen am Anfang des Telegramms direkt von der Quelle zu dem Ziel geschleust werden. Hierbei muss eine minimale Verzögerung der Switches eingerechnet werden. Um in einem Fehlerfall eine entsprechende Entkopplung garantieren zu können, wird meist das so genannte "store-and-forward-Prinzip" verwendet, dass die einzelnen Telegramme in jeder Netzwerkkomponente zwischenspeichert. Hierdurch ergibt sich eine Gesamtübertragungszeit, die üblicherweise im Bereich von einigen Millisekunden liegt. Eine Ethernet-Verbindung stellt grundsätzlich ein aktives Netz dar, bei dem die erforderliche Verfügbarkeit bei einem Ausfall einer der Netzwerkkomponenten bzw. eines Netzwerksegments durch eine redundante Wegewahl erreicht wird. Dies wird beispielsweise strukturell dadurch erreicht, dass eine lineare Topologie zu einem Ring zusammengefasst wird.

In einer Reihe von Anwendungsfällen spricht eine Datenquelle mehrere Datensenken an (Multicast). Dies ist z.B. der Fall, wenn der Messwert für eine Stromstärke für verschiedene Schutzfunktionen benötigt wird. Eine solche Multicast-Kommunikationsverbindung setzt voraus, dass aus Gründen der Effizienz die Daten nur einmal gesendet werden. Ein weiterer wichtiger Aspekt ist dabei die Synchronität der Daten. Sind die Daten zeitlich verzerrt, so ist das Ergebnis einer Verknüpfung zweifelhaft. Ebenso ist es erforderlich, dass auch nicht zeitkritische Daten auf demselben Kommunikationskanal übertragen werden können.

Andere Echtzeitsysteme wie EtherCAT nutzen eine gepackte Übertragung. Allerdings lässt sich hierbei eine Multicast-Verbindung nur ausgehend von einem Master realisieren. Hierbei spielt ebenso durch die Richtungsabhängigkeit die Reihenfolge eine entscheidende Rolle.

Viele Echtzeitsysteme wie Profinet reservieren eine bestimmte Datenrate für zyklische Dienste. Die restlichen Daten können dann über eine Standard-Ethernet-Verbindung ausgetauscht werden. Somit ändert sich zwar die Effizienz der Datenübertragung prinzipiell nicht, dafür werden aber die minimalen Zykluszeiten beschränkt. Ein weiter problematischer Aspekt ist der so genannte Frame Overhead. In einer Client-Server-Kommunikationsbeziehung wird dies gelöst durch ein dynamisches Packverhalten, indem eine ausgewählte Komponente entweder Quelle oder Senke der Daten ist. Bei Multicast-Verbindungen kann auch üblicherweise eine Einzelübertragung eingesetzt werden, wobei hierbei sowohl die Datenübertragungsrate als auch die Systemlast beschränkt wird.

Die US 2010/0008372 A1 beschreibt in einer Ausführungsform ein Automatisierungssystem, bei dem durch ein einziges Telegramm eine Mehrzahl von Netzwerkkomponenten erreicht wird. Hierbei wird beim Empfang eines Telegramms die für die Netzwerkkomponente darin enthaltenen Nutzdaten, also die Datagramme, entnommen und das Telegramm um das entnommene Datagramm verkürzt. Auf diese Weise kann eine Steigerung des Datendurchsatzes erreicht werden.

Des Weiteren beschreibt die US 2010/0070666 A1 ein Verfahren zum Zuordnen des jeweiligen Zugriffs von Geräten auf einen gemeinsamen Kommunikationsbus. Dabei können den einzelnen Geräten nacheinander Zeitbereiche zugeordnet werden, in denen sie Daten senden können.

Schließlich beschreibt die WO 2009/098616 A1 eine Mehrzahl von Knoten, die mittels einer FlexRay-Verbindung in einer Ringtopologie angeordnet sind. Dabei können mit jedem Knoten Nachrichten zu den anderen Knoten gesendet und Nachrichten von den anderen Knoten empfangen werden. Zudem können mit jedem Knoten Nachrichten weitergeleitet werden. Des Weiteren ist es vorgesehen, dass nur ein Knoten berechtigt ist, eine Nachricht mit einer spezifischen Nachrichtenkennung auszusenden.

Die Aufgabe der vorliegenden Erfindung, in einem Automatisierungssystem der eingangs genannten Art, das mehrere Netzwerkkomponenten umfasst, eine effektivere Datenübertragung zwischen den einzelnen Netzwerkkomponenten zu erreichen.

Diese Aufgabe wird erfindungsgemäß gelöst durch ein Verfahren gemäß Patentanspruch 1. Demnach wird bereitgestellt ein Verfahren zum Übertragen von Telegrammen in einem Automatisierungssystem, in dem eine Mehrzahl von Netzwerkkomponenten zu einem Netzwerk verbunden sind, wobei in jedem der Telegramme jeder der Netzwerkkomponenten ein Datagramm zugeordnet ist und wobei von jeder der Netzwerkkomponenten die folgenden Schritte durchgeführt werden:
- Empfangen eines ersten der Telegramme,
- Entfernen des der Netzwerkkomponente zugeordneten Datagramms aus dem ersten Telegramm,
- Übertragen eines zweiten Telegramms an zumindest eine der Netzwerkkomponenten des Netzwerks, und
- Einfügen eines aktualisierten, der Netzwerkkomponente zugeordneten Datagramms in das erste Telegramm, wodurch das zweite Telegramm gebildet wird.

Bei dem erfindungsgemäßen Verfahren umfasst das Automatisierungssystem eine Mehrzahl von gleichberechtigten Netzwerkkomponenten, die zu einem Netzwerk verbunden sind. Hierbei ist keine hierarchische Struktur zwischen den einzelnen Netzwerkkomponenten notwendig. Die einzelnen Netzwerkkomponenten sind in einer Multicast-Verbindung angeordnet. Zunächst wird von jeder Netzwerkkomponente ein entsprechender Rahmen mit dem eigenen Datagramm generiert. Parallel dazu wird von jeder der Netzwerkkomponenten ein erstes Telegramm empfangen, das für jede der Netzwerkkomponenten ein entsprechendes Datagramm umfasst. Jede der Netzwerkkomponenten kann das ihr zugeordnete Datagramm entfernen und ein ihr zugeordnetes, aktualisiertes Datagramm einfügen. Das somit gebildete zweite Telegramm wird an die anderen Netzwerkkomponenten des Netzwerks übertragen. Die empfangenen Daten können von jeder Netzwerkkomponente nach Belieben genutzt werden.

Ein solches Datagramm kann beispielsweise ein Datenframe, Datenpakete oder Datensegmente umfassen. In einem Automatisierungssystem können hier entsprechende Messwerte bzw. Größen, die einen Betriebszustand der einzelnen Netzwerkkomponente charakterisieren, enthalten sein. Auf diese Weise kann eine schnelle Datenübertragung zwischen den einzelnen Netzwerkkomponenten und eine erhöhte Verfügbarkeit erreicht werden.

Zudem wird für einen Zeitraum zwischen dem Empfangen des ersten Telegramms und dem Übertragen des zweiten Telegramms für jede der Netzwerkkomponenten eine Mindestdauer vorgegeben. Bei einer zeitgesteuerten Übertragung der Datagramme zwischen den einzelnen Netzwerkkomponenten könnte es der Fall sein, dass das erste Telegramm erst eintrifft, nachdem das zweite Telegramm bereits übertragen wurde. Um dies zu vermeiden, kann eine entsprechende Mindestdauer vorgegeben werden. Auf diese Weise kann eine besondere sichere und zuverlässige Übertragung der Datagramme zwischen den einzelnen Netzwerkkomponenten erreicht werden. Ebenso kann eine maximale Verzögerung zwischen dem Empfangen des ersten Telegramms und dem Übertragen des zweiten Telegramms berücksichtigt werden. Die hierfür vorgegebene Zeitdauer kann entweder statisch bei der Konfiguration des Automatisierungssystems oder dynamisch durch die Messung der entsprechenden Verzögerungszeit bestimmt werden.

Des Weiteren werden die Telegramme durch alle Netzwerkkomponenten synchron übertragen. Hierbei wird zu einem vorgegebenen Zeitpunkt die Übertragung der Telegramme durch alle Netzwerkkomponenten gestartet und somit ein entsprechender Zyklus ermöglicht. Durch das synchrone Übertragen der Telegramme können entsprechende Verzögerungszeiten minimiert werden und die Daten somit besonders sicher und zuverlässig übertragen werden.

Bevorzugt umfasst das von der Netzwerkkomponente empfangene erste Telegramm ein von der Netzwerkkomponente zu einem früheren Zeitpunkt eingefügtes Datagramm und dieses wird von der Netzwerkkomponente entfernt und das aktualisierte Datagramm eingefügt. Die einzelnen Netzwerkkomponenten sind in dem Netzwerk so miteinander verbunden, dass das von einer Netzwerkkomponente zu einem früheren Zeitpunkt eingefügte Datagramm wieder von dieser Netzwerkkomponente empfangen wird. Hierbei kann von der Netzwerkkomponente - falls dies notwendig ist - das eigene Datagramm entsprechend aktualisiert und in das Telegramm eingefügt werden. Somit wird von jeder der Netzwerkkomponente nur das eigene Datagramm überwacht und entsprechend aktualisiert. Auf diese Weise kann eine besonders effektive Datenübertragung zwischen den einzelnen Netzwerkkomponenten einer Automatisierungsanlage erreicht werden.

In einer bevorzugten Ausführungsform werden die von der Netzwerkkomponente im ersten Telegramm empfangenen Datagramme der anderen Netzwerkkomponenten des Netzwerks durch die Netzwerkkomponente in dem zweiten Telegramm weitergeleitet. Jede der Netzwerkkomponenten empfängt in dem ersten Telegramm die entsprechenden Datagramme der anderen Netzwerkkomponenten des Netzwerks. Auf diese Weise können die entsprechenden Datagramme unter den einzelnen Netzwerkkomponenten besonders einfach ausgetauscht und zur Verfügung gestellt werden. Die von der jeweiligen Netzwerkkomponente empfangenen Datagramme der anderen Netzwerkkomponenten werden beispielsweise in einem Speicherelement der Netzwerkkomponente entsprechend zwischengespeichert und in das zweite Telegramm übertragen. Diese Datagramme werden herbei nicht verändert. Das Übertragen der Datagramme der anderen Netzwerkkomponenten kann zusammen mit dem Einfügen des aktualisierten Datagramms der eigenen Netzwerkkomponente erfolgen. Somit können die Datagramme besonders einfach und effektiv zwischen den einzelnen Netzwerkkomponenten ausgetauscht werden.

In einer weiteren Ausführungsform wird das Übertragen der Telegramme von einer der Netzwerkkomponenten in Abhängigkeit von einem Ereignis gestartet. Ebenso kann das Verfahren zum Übertragen von Telegrammen in einem Automatisierungssystem ereignisgesteuert durchgeführt werden. Dabei kann von einer der Netzwerkkomponenten der Prozess angestoßen werden, welche zunächst ihr eigenes Datagramm an die übrigen Netzwerkkomponenten sendet. Hierbei kann beispielsweise in einem ersten Durchlauf die einzelnen Datagramme der jeweiligen Netzwerkkomponenten in das Telegramm aufgenommen werden und in einem zweiten Durchlauf die Verteilung der einzelnen Datagramme ermöglicht werden. Somit kann das Automatisierungssystem in Abhängigkeit von einem bestimmten Ergebnis angesteuert werden und somit der Datentransfer zwischen den einzelnen Netzwerkkomponenten gestartet werden. Somit kann das Automatisierungssystem besonders effektiv betrieben werden.

Überdies wird erfindungsgemäß bereitgestellt ein Automatisierungssystem mit einer Mehrzahl von Netzwerkkomponenten, die zu einem Netzwerk verbunden sind, wobei jede der Netzwerkkomponenten dazu ausgebildet ist, ein erstes Telegramm zu empfangen, wobei jeder der Netzwerkkomponenten ein Datagramm in dem ersten Telegramm zugeordnet ist, das der jeweiligen Netzwerkkomponente zugeordnete Datagramm aus dem ersten Telegramm zu entfernen, und ein zweites Telegramm an zumindest eine der Netzwerkkomponenten des Netzwerks zu übertragen, wobei jede der Netzwerkkomponenten dazu ausgebildet ist, ein aktualisiertes, der jeweiligen Netzwerkkomponente zugeordnetes Datagramm in das erste Telegramm einzufügen, wodurch das zweite Telegramm gebildet ist, wobei jede der Netzwerkkomponenten dazu ausgebildet ist, für einen Zeitraum zwischen dem Empfangen des ersten Telegramms und dem Übertragen des zweiten Telegramms für jede der Netzwerkkomponenten eine Mindestdauer vorzugeben und die Telegramme durch alle Netzwerkkomponenten synchron zu übertragen.

Die vorliegend in Zusammenhang mit dem erfindungsgemäßen Verfahren zum Übertragen von Telegrammen in einem Automatisierungssystem beschriebenen Weiterbildungen können ebenso auf das erfindungsgemäße Automatisierungssystem übertragen werden.

In einer bevorzugten Ausführungsform umfassen die jeweiligen Datagramme in dem ersten und zweiten Telegramm eine zuvor bestimmte Datenmenge. Durch eine zuvor festgelegte Datenmenge kann verhindert werden, dass ein erstes Telegramm von der Netzwerkkomponente empfangen wird, bevor das zweite Telegramm ausgesendet wird. Somit kann eine besonders sichere und zuverlässige Kommunikation zwischen den einzelnen Netzwerkkomponenten erreicht werden. Ebenso können die Datagramme beispielsweise in zwei oder mehrere Frames aufgeteilt werden.

Dies kann beispielsweise genutzt werden, wenn die maximale Framegröße der verwendeten Datenverbindung überschritten wird. Hierbei kann auch eine entsprechende Verzögerungszeit berücksichtigt werden, um sicher zu stellen, dass die einzelnen Frames zuverlässig an die Netzwerkkomponenten übertragen werden.

Bevorzugt sind die Netzwerkkomponenten in dem Netzwerk in einer Ringstruktur angeordnet. Bei dieser Topologie kann das Übertragen des zweiten Telegramms durch die jeweiligen Netzwerkkomponenten jeweils zu einem definierten Zeitpunkt gestartet werden. Somit kann auf einfache Weise erreicht werden, dass die Datagramme zwischen den einzelnen Netzwerkkomponenten ausgetauscht werden.

In einer weiteren Ausführungsform sind die Netzwerkkomponenten in dem Netzwerk in einer Linienstruktur angeordnet. Ebenso sind die einzelnen Netzwerkkomponenten in einer Linientopologie angeordnet sein. In dieser Anordnung kann der Start der Übertragung der Telegramme beispielsweise durch die sich an den Enden der Linie befindlichen Netzwerkkomponenten initiiert werden. Ebenso lassen sich mit dem Automatisierungssystem entsprechende hierarchische Systeme realisieren.

Die vorliegende Erfindung wird nun anhand der beigefügten Zeichnungen näher erläutert. Dabei zeigen:
- FIG 1: eine schematische Darstellung eines Automatisierungssystems, das eine Mehrzahl von Netzwerkkomponenten erfasst, die in einer Ringstruktur angeordnet sind;
- FIG 2: eine schematische Darstellung eines Automatisierungssystems gemäß FIG 1 in einer weiteren Ausführungsform;
- FIG 3: eine schematische Darstellung eines Automatisierungssystems, wobei die Netzwerkkomponenten in einer Linienstruktur angeordnet sind;
- FIG 4: eine schematische Darstellung eines Automatisierungssystems, wobei die Netzwerkkomponenten in einer hierarchischen Struktur angeordnet sind; und
- FIG 5: eine Darstellung von Tabellen, die die Anordnung der Datagramme in den Telegrammen der Netzwerkkomponenten veranschaulicht.

Die nachfolgend näher geschilderten Ausführungsbeispiele stellen bevorzugte Ausführungsformen der vorliegenden Erfindung dar.

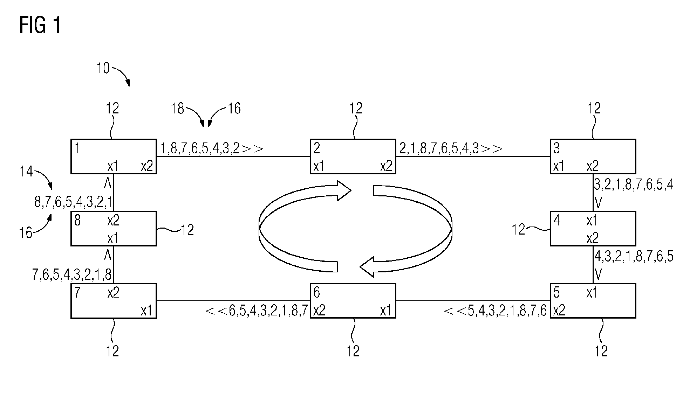

FIG 1 zeigt eine schematische Darstellung eines Automatisierungssystems 10, bei dem eine Mehrzahl von Netzwerkkomponenten 12 zu einem Netzwerk verbunden sind. Vorliegend sind die Netzwerkkomponenten 12 in einer Ringstruktur angeordnet. Die in FIG 1 dargestellte Ringstruktur umfasst acht Netzwerkkomponenten 12, die in der Darstellung entsprechend nummeriert sind. Jede der Netzwerkkomponenten 12 umfasst zwei Ports, die mit X1 und X2 bezeichnet sind.

Zwischen den einzelnen Netzwerkkomponenten 12 erfolgt ein Datenaustausch. Dies wird vorliegend am Beispiel der Netzwerkkomponente 12 beschrieben, die mit der Nummer Eins bezeichnet ist. Die Netzwerkkomponente 12, die mit der Nummer Eins bezeichnet ist, empfängt über ihren Port X1 ein erstes Telegramm 14. Dieses erste Telegramm 14 umfasst jeweils ein Datagramm 16 für jede der Netzwerkkomponenten 12. In der Darstellung in FIG 1 sind die Datagramme 16 durch die jeweiligen Ziffern der Netzwerkkomponenten 12 dargestellt, die durch Kommata voneinander getrennt sind. Hierbei entspricht jede Ziffer in dem Datagramm 16 der entsprechenden Netzwerkkomponente 12. Unter Datagramm 16 ist im Folgenden ein entsprechender Datenframe, Datenpakete oder Datensegmente zu verstehen. Diese Datagramme 16 können beispielsweise entsprechende Messwerte der einzelnen Netzwerkkomponenten 12 enthalten und/oder in den Datagrammen 16 können Größen gespeichert sein, die den Betriebszustand der jeweiligen Netzwerkkomponente 12 charakterisieren.

Die Netzwerkkomponente 12, die mit der Nummer Eins bezeichnet ist, empfängt das erste Telegramm 14. Die Netzwerkkomponente 12, die mit der Nummer Eins bezeichnet ist, entfernt das ihr zugeordnetes Datagramm 16, das durch die Ziffer Eins repräsentiert wird. Von der Netzwerkkomponente 12, die mit der Nummer Eins bezeichnet ist, wird ein zweites Telegramm 18 übermittelt, in dem ein aktualisiertes, dieser Netzwerkkomponente 12 zugeordnetes Datagramm 16 eingefügt ist. Dieses zweite Telegramm 18 wird an die Netzwerkkomponente 12 weitergeleitet, die mit der Nummer Zwei bezeichnet ist.

Im hier dargestellten Ausführungsbeispiel werden die Telegramme 14, 18 zwischen den einzelnen Netzwerkkomponenten 12 im Uhrzeigersinn ausgetauscht. Hierbei werden die der Netzwerkkomponente 12 zugeordneten Datagramme 16 entsprechend durch die jeweilige Netzwerkkomponente 12 aktualisiert. Die Datagramme 16 der übrigen Netzwerkkomponenten 12 werden dabei unverändert in das zweite Telegramm 18 weitergeleitet. Somit wird von jeder der Netzwerkkomponenten 12 beim Empfangen des ersten Telegramms 14 nur das Datagramm 16 aktualisiert, das der entsprechenden Netzwerkkomponente 12 zugeordnet ist. Zu diesem Zweck können die in dem Datagramm 16 enthaltenen Daten entsprechend gelöscht und neu eingefügt bzw. überschrieben werden.

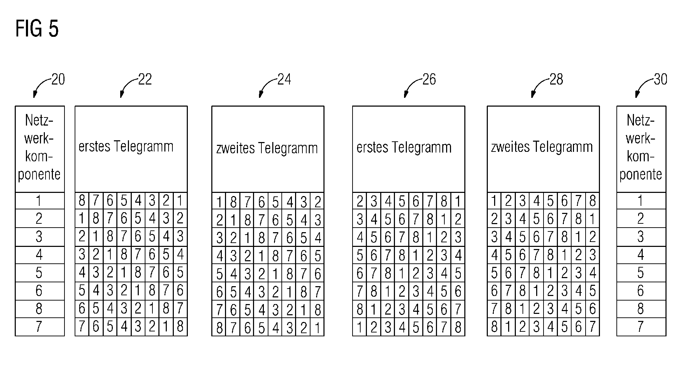

In FIG 5 sind in den Tabellen 22, 24, 26 und 28 die entsprechenden Telegramme 14, 18 der jeweiligen Netzwerkkomponenten 12 dargestellt. In einer ersten Tabelle 20 sind die Nummern der einzelnen Netzwerkkomponenten 12 untereinander dargestellt. In einer weiteren Tabelle 22 sind die ersten Telegramme 14 der Netzwerkkomponenten 12 mit den Nummern Eins bis Acht in den jeweiligen Zeilen dargestellt. In der Tabelle 24 sind jeweils die zweiten Telegramme 18 der jeweiligen Netzwerkkomponenten 12 dargestellt. Die Tabellen 22 bis 24 gelten für den Fall, dass die Telegramme 14, 18 zwischen den acht Netzwerkkomponenten 12 im Uhrzeigersinn ausgetauscht werden. Die in der FIG 5 dargestellten Tabellen 26 bis 30 gelten für den Fall, dass die Telegramme 14, 18 in der zuvor beschriebenen Ringstruktur gegen den Uhrzeigersinn ausgetauscht werden. Dabei zeigen die Zeilen der Tabelle 26 die ersten Telegramme 14 der jeweiligen Netzwerkkomponenten 12 und die Zeilen der Tabelle 28 die jeweiligen zweiten Telegramme 18 der Netzwerkkomponenten 12, deren Nummerierung in Tabelle 30 dargestellt ist.

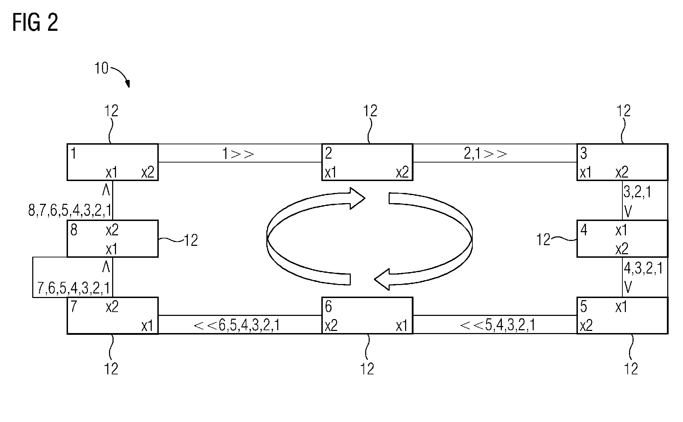

In dem in FIG 1 dargestellten Beispiel werden die zweiten Telegramme 18 von den jeweiligen Netzwerkkomponenten 12 an zuvor festgelegten Zeitpunkten synchron an die jeweilige benachbarte Netzwerkkomponente 12 übermittelt. Ebenso ist es denkbar, dass die Übertragung der Telegramme 14, 18 zwischen den einzelnen Netzwerkkomponenten 12 ereignisgesteuert erfolgt. Ein solches Beispiel ist in FIG 2 dargestellt. Hierbei wird die Übertragung der Telegramme 14, 18 von der Netzwerkkomponente 12 gestartet, die mit der Nummer Eins bezeichnet ist. Die Telegramme 14, 18 werden jeweils im Uhrzeigersinn zwischen den einzelnen Netzwerkkomponenten 12 weitergeleitet, dabei werden in einem ersten Durchlauf die Datagramme 16 der einzelnen Netzwerkkomponenten in das jeweilige zweite Telegramm 18 geschrieben. Ist nach dem ersten Durchlauf das Telegramm 14, 18 wieder bei der Netzwerkkomponente, die mit der Nummer Eins bezeichnet ist, angelangt, so kann der Datenaustausch wie zuvor beschrieben erfolgen.

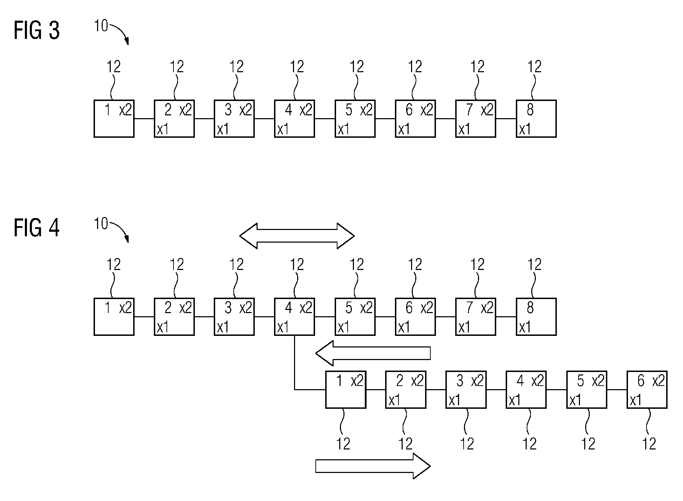

FIG 3 zeigt eine schematische Darstellung eines Automatisierungssystems 10, in dem die einzelnen Netzwerkkomponenten 12 in einer Linienstruktur angeordnet sind. Hierbei kann die Übertragung der Telegramme 14, 18 entweder zeitgesteuert oder ereignisgesteuert erfolgen. Hierbei kann die Übertragung der Telegramme 14, 18 beispielsweise von einer der Netzwerkkomponenten 12 initiiert werden, die sich am Anfang bzw. am Ende der Linienstruktur befindet.

FIG 4 zeigt eine schematische Darstellung eines Automatisierungssystems 10, in dem die einzelnen Netzwerkkomponenten 12 in einer hierarchischen Struktur angeordnet sind. Hierbei ist die Netzwerkkomponente 12 in der oberen Linie, die mit der Nummer Vier bezeichnet ist, als übergeordnete Netzwerkkomponente 12 ausgebildet. Auch hier können die Telegramme 14, 18 wie zuvor beschrieben zwischen den Netzwerkkomponenten 12 ausgetauscht werden.

## Patentansprüche

1. Verfahren zum Übertragen von Telegrammen (14,18) in einem Automatisierungssystem (10), in dem eine Mehrzahl von Netzwerkkomponenten (12) zu einem Netzwerk verbunden sind, wobei in jedem der Telegramme (14,18) jeder der Netzwerkkomponenten (12) ein Datagramm (16) zugeordnet ist, und wobei von jeder der Netzwerkkomponenten (12) die folgenden Schritte durchgeführt werden:
- Empfangen eines ersten der Telegramme (14),
- Entfernen des der Netzwerkkomponente (12) zugeordneten Datagramms (16) aus dem ersten Telegramm (14),
- Übertragen eines zweiten Telegramms (18) an zumindest eine der Netzwerkkomponenten (12) des Netzwerks und
- Einfügen eines aktualisierten, der Netzwerkkomponente (12) zugeordneten Datagramms (16) in das erste Telegramm (14), wodurch das zweite Telegramm (18) gebildet wird
**dadurch gekennzeichnet, dass**
- für einen Zeitraum zwischen dem Empfangen des ersten Telegramms (14) und dem Übertragen des zweiten Telegramms (18) für jede der Netzwerkkomponenten (12) eine Mindestdauer vorgegeben wird und
- die Telegramme (14,18) durch alle Netzwerkkomponenten (12) synchron übertragen werden.

2. Verfahren nach Anspruch 1, **dadurch gekenn** - **zeichnet**, dass das von der Netzwerkkomponente (12) empfangene erste Telegramm (14) ein von der Netzwerkkomponente (12) zu einem früheren Zeitpunkt eingefügtes Datagramm (16) umfasst, und dieses von der Netzwerkkomponente (12) entfernt und das aktualisierte Datagramm (16) eingefügt wird.

3. Verfahren nach Anspruch 1 oder 2, **dadurch ge - kennzeichnet,** dass die von der Netzwerkkomponente (12) im ersten Telegramm (14) empfangenen Datagramme (16) der anderen Netzwerkkomponenten (12) des Netzwerks durch die Netzwerkkomponente (12) in dem zweiten Telegramm (18) weitergeleitet werden.

4. Verfahren nach einem der vorhergehenden Ansprüche, **da - durch gekennzeichnet** , dass das Übertragen der Telegramme (14,18) von einer der Netzwerkkomponenten (12) in Abhängigkeit von einem Ereignis gestartet wird.

5. Automatisierungssystem (10) mit
- einer Mehrzahl von Netzwerkkomponenten (12), die zu einem Netzwerk verbunden sind, wobei
- jede der Netzwerkkomponenten (12) dazu ausgebildet ist:
• ein erstes Telegramm (14) zu empfangen, wobei jeder der Netzwerkkomponenten (12) ein Datagramm (16) in dem ersten Telegramm (14) zugeordnet ist,
• das der jeweiligen Netzwerkkomponente (12) zugeordnete Datagramm (16) aus dem ersten Telegramm (14) zu entfernen, und
• ein zweites Telegramm (18) an zumindest eine der Netzwerkkomponenten (12) des Netzwerks zu übertragen, wobei
- jede der Netzwerkkomponenten (12) dazu ausgebildet ist, ein aktualisiertes, der jeweiligen Netzwerkkomponente (12) zugeordnetes Datagramm (16) in das erste Telegramm (14) einzufügen, wodurch das zweite Telegramm (18) gebildet ist,
**dadurch gekennzeichnet, dass**
- jede der Netzwerkkomponenten (12) dazu ausgebildet ist, für einen Zeitraum zwischen dem Empfangen des ersten Telegramms (14) und dem Übertragen des zweiten Telegramms (18) für jede der Netzwerkkomponenten (12) eine Mindestdauer vorzugeben und
- die Telegramme (14,18) durch alle Netzwerkkomponenten (12) synchron zu übertragen.

6. Automatisierungssystem (10) nach Anspruch 5, da- **durch gekennzeichnet** , dass die jeweiligen Datagramme (16) in dem ersten und zweiten Telegramm (14, 18) eine zuvor bestimmet Datenmenge umfassen.

7. Automatisierungssystem (10) Anspruch 5 oder 6, **da- durch gekennzeichnet** , dass die Netzwerkkomponenten (12) in dem Netzwerk in einer Ringstruktur angeordnet sind.

8. Automatisierungssystem (10) nach Anspruch 5 oder 6, **dadurch gekennzeichnet, dass** die Netzwerkkomponenten (12) in dem Netzwerk in einer Linienstruktur angeordnet sind.

## Claims

1. Method for transmitting telegrams (14,18) in an automation system (10), in which a plurality of network components (12) are connected to form a network, wherein in each of the telegrams (14,18) a datagram (16) is associated with each of the network components (12), and wherein the following steps are carried out by each of the network components (12):
- receiving of a first one of the telegrams (14),
- removal of the datagram (16) associated with the network component (12) from the first telegram (14),
- transmission of a second telegram (18) to at least one of the network components (12) of the network and
- insertion of an updated datagram (16) associated with the network component (12) in the first telegram (14), whereby the second telegram (18) is formed
**characterised in that**
- a minimum duration is specified for each of the network components (12) for a period between receiving of the first telegram (14) and transmission of the second telegram (18) and
- the telegrams (14,18) are synchronously transmitted by all network components (12).

2. Method according to claim 1, **characterised in that** the first telegram (14), received by the network component (12), comprises a datagram (16) inserted by the network component (12) at an earlier instant, and this is removed by the network component (12) and the updated datagram (16) is inserted.

3. Method according to claim 1 or 2, **characterised in that** the datagrams (16), received by the network component (12) in the first telegram (14), of the other network components (12) of the network are forwarded by the network component (12) in the second telegram (18).

4. Method according to any one of the preceding claims, **characterised in that** transmission of the telegrams (14,18) is started by one of the network components (12) as a function of a result.

5. Automation system (10) comprising
- a plurality of network components (12) which are connected to form a network, wherein
- each of the network components (12) is designed to:
• receive a first telegram (14), wherein a datagram (16) is associated with each of the network components (12) in the first telegram (14),
• remove the datagram (16) associated with the respective network component (12) from the first telegram (14), and
• transmit a second telegram (18) to at least one of the network components (12) of the network, wherein
- each of the network components (12) is designed to insert an updated datagram (16) associated with the respective network component (12) in the first telegram (14), whereby the second telegram (18) is formed
**characterised in that**
- each of the network components (12) is designed to specify a minimum duration for each of the network components (12) for a period between receiving of the first telegram (14) and transmission of the second telegram (18) and
- to transmit the telegrams (14,18) by all network components (12) synchronously.

6. Automation system (10) according to claim 5, **characterised in that** the respective datagrams (16) in the first and second telegram (14, 18) comprise a previously determined data volume.

7. Automation system (10) according to claim 5 or 6, **characterised in that** the network components (12) are arranged in a ring structure in the network.

8. Automation system (10) according to claim 5 or 6, **characterised in that** the network components (12) are arranged in a line structure in the network.

## Revendications

1. Procédé de transmission de télégrammes ( 14, 18 ) dans un système ( 10 ) d'automatisation, dans lequel une multiplicité de composants ( 12 ) de réseau sont reliés en un réseau, dans lequel un datagramme ( 16 ) est affecté dans chacun des télégrammes ( 14, 18 ) à chacun des composants ( 12 ) du réseau et dans lequel il est effectué, par chacun des composants ( 12 ) du réseau, les stades suivants :
- réception d'un premier des télégrammes ( 14 ),
- élimination du premier télégramme ( 14 ) du datagramme ( 16 ) affecté aux composants ( 12 ) du réseau,
- transmission d'un deuxième télégramme ( 18 ) à au moins l'un des composants ( 12 ) du réseau et
- insertion dans le premier télégramme ( 14 ) d'un datagramme ( 16 ) mis à jour et affecté aux composants ( 12 ) du réseau, le deuxième télégramme ( 18 ) étant ainsi formé,
**caractérisé en ce que**
- pendant un laps de temps compris entre la réception du premier télégramme ( 14 ) et la transmission du deuxième télégramme ( 18 ), on prescrit une durée minimum pour chacun des composants ( 12 ) du réseau et
- les télégrammes ( 14, 18 ) sont transmis en synchronisme par tous les composants ( 12 ) du réseau.

2. Procédé suivant la revendication 1, **caractérisé en ce que** le premier télégramme ( 14 ) reçu par le composant ( 12 ) du réseau comprend un datagramme ( 16 ) inséré par le composant ( 12 ) du réseau à un instant antérieur et celui-ci est éliminé par le composant ( 12 ) du réseau et le datagramme ( 16 ) mis à jour est inséré.

3. Procédé suivant la revendication 1 ou 2, **caractérisé en ce que** les datagrammes ( 16 ) reçus dans le premier télégramme ( 14 ) par le composant ( 12 ) du réseau sont acheminés aux autres composants ( 12 ) du réseau par les composants ( 12 ) du réseau dans le deuxième télégramme ( 18 ).

4. Procédé suivant l'une des revendications précédentes, **caractérisé en ce que** l'on fait débuter la transmission des télégrammes ( 14, 18 ) par l'un des composants ( 12 ) du réseau en fonction d'un événement.

5. Système ( 10 ) d'automatisation, comprenant
- une multiplicité de composants ( 12 ) de réseau, qui sont reliés en un réseau, dans lequel
- chacun des composants ( 12 ) du réseau est constitué .
• pour recevoir un premier télégramme ( 14 ), un datagramme ( 16 ) dans le premier télégramme ( 14 ) étant affecté à chacun des composants ( 12 ) du réseau,
• pour que le datagramme ( 16 ) affecté aux composants ( 12 ) du réseau respectifs soit éliminé du premier télégramme ( 14 ), et
• pour qu'un deuxième télégramme ( 18 ) soit transmis à au moins l'un des composants ( 12 ) du réseau, dans lequel
- chacun des composants ( 12 ) du réseau est constitué pour insérer dans le premier télégramme ( 14 ) un datagramme ( 16 ) mis à jour et affecté aux composants ( 12 ) du réseau respectifs, le deuxième télégramme ( 18 ) étant ainsi formé
**caractérisé en ce que**
- chacun des composants ( 12 ) du réseau est constitué pour prescrire, pendant un laps de temps compris entre la réception du premier télégramme ( 14 ) et la transmission du deuxième télégramme ( 18 ) pour chacun des composants ( 12 ) du réseau, une durée minimum et
- les télégrammes ( 14, 18 ) sont transmis en synchronisme par tous les composants ( 12 ) du réseau.

6. Système ( 10 ) d'automatisation suivant la revendication 5, **caractérisé en ce que** les datagrammes ( 16 ) respectifs dans le premier et le deuxième télégrammes ( 14, 18 ) comprennent une quantité de données déterminées à l'avance.

7. Système ( 10 ) d'automatisation suivant la revendication 5 ou 6, **caractérisé en ce que** les composants ( 12 ) du réseau sont disposés dans le réseau suivant une structure en anneau.

8. Système ( 10 ) d'automatisation suivant la revendication 5 ou 6, **caractérisé en ce que** les composants ( 12 ) du réseau sont disposés dans le réseau suivant une structure en ligne.
